# EUROPÄISCHE PATENTSCHRIFT

(11) **EP 1 121 285 B1**
(45) Veröffentlichungstag und Bekanntmachung des Hinweises auf die Patenterteilung: **21.04.2004**
(21) Anmeldenummer: 99950694.2
(22) Anmeldetag: 11.10.1999
(51) Int. Cl.: B60T 17/08

(54) **DRUCKFEDERANORDNUNG IN EINEM BREMSZYLINDER, INSBESONDERE VON FESTSTELLBREMSEN BEI NUTZFAHRZEUGEN**
PRESSURE SPRING ARRANGEMENT IN A BRAKE CYLINDER, ESPECIALLY OF PARKING BRAKES INSTALLED IN COMMERCIAL VEHICLES
ENSEMBLE RESSORT DE PRESSION MONTE DANS UN CYLINDRE DE FREIN, NOTAMMENT DANS DES FREINS DE STATIONNEMENT DE VEHICULES UTILITAIRES

(30) Priorität: 12.10.1998 DE 19846850
(43) Veröffentlichungstag der Anmeldung: 08.08.2001
(73) Patentinhaber: KNORR-BREMSE Systeme für Schienenfahrzeuge GmbH, 80809 München (DE)
(72) Erfinder: SIEBKE, Alf, D-80333 München (DE)
(86) Internationale Anmeldenummer: PCT/EP1999/007605
(87) Internationale Veröffentlichungsnummer: WO 2000/021813

(56) Entgegenhaltungen:
- EP-A- 0 020 862
- DE-A- 3 536 767
- FR-A- 2 562 622

## Beschreibung

Die Erfindung betrifft einen Bremszylinder, insbesondere von Feststellbremsen bei Nutzfahrzeugen, nach dem Gattungsbegriff des Patentanspruches 1.

Für Feststellbremsen bei Nutzfahrzeugen werden üblicherweise Federspeicherzylinder eingesetzt, entweder in Alleinstellung oder in Kombination mit Betriebsbremszylindem, wobei zur Speicherung der benötigten Betätigungskraft der Bremse und zur Ausführung des Arbeitshubes im Regelfall Schrauben-Druckfedern zur Anwendung gelangen, welche pneumatisch vorgespannt werden.

Die Auslegung derartiger Druck- bzw. Speicherfedem wird durch eine Vielzahl von Kriterien bestimmt, von welchen der verfügbare Einbauraum und die zu erzielende Kraftabgabe als wesentlich zu nennen sind. Die Erreichung einer möglichst hohen Kraftabgabe im definierten Arbeitspunkt (z.B. ½ Hub max.) bei gleichzeitig begrenztem Lösedruck und begrenztem Bauraum ist nur durch eine möglichst flache Federkennlinie möglich, d.h. durch eine möglichst geringe Federrate. Diese ist u.a. durch die Windungszahl beeinflußbar, da mit zunehmender Windungszahl die Federrate sinkt. Theoretisch wird eine optimal weiche Feder bei gegebener maximaler Spannung erreicht, wenn der zur Verfügung stehende Bauraum für die Feder vollständig ausgefüllt ist.

Diesem Sachverhalt wird in bekannten Ausführungsformen durch unterschiedliche Maßnahmen Rechnung getragen. Es kommen Federsätze zur Anwendung, wobei zwei oder mehr ineinander angeordnete Federn parallel geschaltet sind. Fernerhin kommen sogenannte Miniblockfedern zur Anwendung, deren Windungen zumindest teilweise ineinandertauchen können. Gekennzeichnet sind derartige Federtypen durch den zu den beiden Federenden hin abnehmenden Windungsdurchmesser (eingerollte Feder) und durch den mit dem Windungsdurchmesser abnehmenden Drahtquerschnitt (DE 35 36 767 A1).

Die beschriebenen Bauweisen für Druckfedern der in Rede stehenden Art sind jedoch als nachteilig in Bezug auf die Herstellkösten eines Bremszylinders anzusehen. Während im ersten Fall die Verwendung mehrerer Federn erhöhte Herstell- und Montagekosten verursacht, ist beim zweiten Ausführungsbeispiel die Bearbeitung des Federstabes von der Formgebung her als aufwendig anzusehen.

Davon ausgehend besteht die Aufgabe der Erfindung darin, bei Bremszylindern der in Rede stehenden Art eine kostengünstige Möglichkeit vorzusehen, das verfügbare Bauvolumen im Federraum möglichst weitgehend zu nutzen. wobei im Vergleich zu herkömmlichen Anordnungen erhöhte Federarbeit bei Hubbewegung unter Federkraft erzielbar sein soll.

Zur Lösung dieser Aufgabe dienen die Merkmale nach dem Kennzeichnungsteil des Patentanspruches 1.

Durch die Formgebung der Druckfeder als eingerollte Feder und ihre Abstützung einerseits am Kolben und andererseits am Gehäuse bzw. Boden des Bremszylinders wird erreicht, daß bei gegebenen Außenmaßen eines Bremszylinders eine vergleichsweise größere Federkraft erzielbar ist, d.h. durch die Verwendung einer eingerollten Feder als Druckfeder und durch die mit negativem Abwälzwinkel ausgestattet Auflage an Kolben und/oder Gehäuse bzw. Boden des Bremszylinders wird erreicht, daß für die Verformung der Enden beim Spannen der Druckfeder zusätzliche Arbeit aufgebracht werden muß, mit der Folge, daß die Druckfeder mehr Energie aufnimmt und diese bei Entspannung als erhöhte Federarbeit umgesetzt werden kann.

Grundsätzlich ist es im Rahmen des der Erfindung eigenen Gedankens als ausreichend anzusehen, wenn die Endwindung (en) der Druckfeder beim Spannen derselben einen ausreichenden Freiheitsgrad der Verformung unter negativem Winkel innerhalb der jeweils angrenzenden Federwindung (en) aufweist bzw. aufweisen; es geht darum, der Druckfeder auf ihrer gesamten Federlänge während des Spannens Energie zuzuführen, also vorzugsweise beginnend von beiden Windungsspitzen an den beiden Federenden. In diesem Sinne könnte das Federende bzw. könnten die Federenden der Druckfeder innerhalb ihres Freiheitsgrades der Verformung ohne direkte Berührung oder Anlage gegenüber dem Kolben bzw. dem Gehäuse verbleiben, wenngleich die auf z.B. 270° erfolgende Abstützung einschließlich Fixierung gegenüber einem Widerlager als vorteilhaft für die Führung und Drehsicherung der Druckfeder anzusehen ist.

Vorteilhafte Ausgestaltungen und Weiterbildungen sind in weiteren Patentansprüchen aufgeführt.

Die Erfindung ist nachfolgend anhand von Ausführungsbeispielen unter Bezugnahme auf die beigefügte Zeichnung erläutert.
Figur 1 ist eine Längsschnittansicht eines Bremszylinders mit einer Federanordnung gemäß der Erfindung;
Figur 2 ist eine Teilansicht der Enden der Druckfeder unter schematischer Darstellung einer der negativ angestellten Abwälzrampen;
Figur 3 ist eine Teilschnittansicht eines die Abwälzrampe mit negativer Steigung aufweisenden Kolbens der in Figur 1 dargestellten Art: und
Figur 4 ist eine Einzelansicht eines eine negativ angestellte Abwälzrampe aufweisenden Einlegeteils für den Kolben bzw. den Gehäuseboden des Bremszylinders.

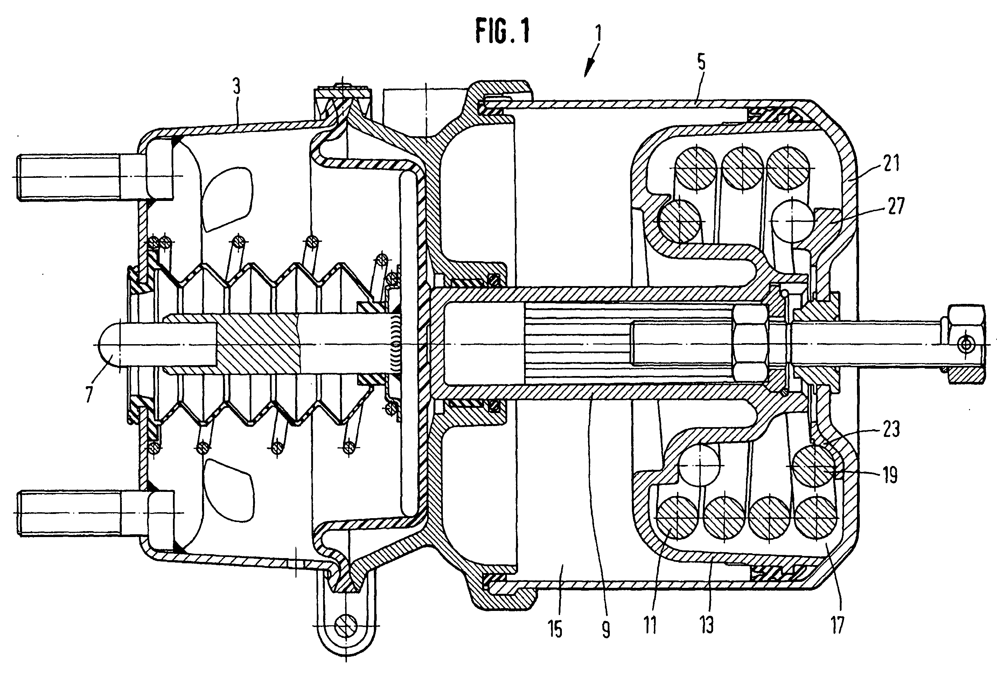

In Figur 1 der Zeichnung ist ein Ausführungsbeispiel eines Bremszylinders dargestellt, an welchem die erfindungsgemäße Druckfederanordnung verwirklicht ist. Der dargestellte Bremszylinder 1 besteht als kombinierter Betriebsbrems- und Federspeicherbremszylinder, auch Kombizylinder bezeichnet, welcher aus dem Betriebsbremszylinder 3 und dem Federspeicherbremszylinder 5 besteht. Der Betriebsbremszylinder 1 entspricht einer an sich bekannten Konstruktion und weist einen Betätigungsstößel 7 auf, welcher auf einen Bremsmechanismus eines Fahrzeuges einzuwirken vermag. Der Federspeicherbremszylinder 5 seinerseits ist mit einer rückwärtig auf den Betriebsbremszylinder einwirkenden Kolbenstange 9 versehen, welche einen von einer Druckfeder 11 beaufschlagbaren Kolben 13 trägt. Der Kolben 13 unterteilt das Gehäuse des Federspeicherbremszylinders in eine Druckkammer 15 und eine Federkammer 17, wobei in die Druckkammer 15 Druckluft einleitbar ist, um den Kolben 13 in der Darstellung nach Figur 1 nach rechts gerichtet zu verschieben und hierdurch die Druckfeder 11 zu spannen. Bei Druckentlastung in der Druckkammer 15 vermag die Druckfeder 11, auch Speicherfeder genannt, den Kolben 13 mit Kolbenstange 9 gemäß Darstellung in Figur 1 nach links gerichtet zu verschieben, derart, daß unter Zwischenschaltung des Betriebsbremszylinders der Betätigungsstößel 7 verschoben werden kann.

Die Druckfeder 11 wurde vorstehend als im Federspeicherbremszylinder eines Kombizylinders befindlich erläutert. Im Rahmen des der Erfindung allgemeinen Gedankens ist die Druckfeder jedoch auch bei Bremszylindern anderer Konstruktion oder anderer Wirkungsweise verwendbar. So kann die Druckfeder in einem herkömmlichen Federspeicherbremszylinder verwendet werden, sie kann auch als Rückstellfeder wirkend eingesetzt sein, also als Feder, welche, dem Betätigungshub eines Bremszylinders entgegengesetzt wirkend, beim Lösen und beim Rückstellen der Bremse eines Fahrzeuges zur Anwendung gelangt.

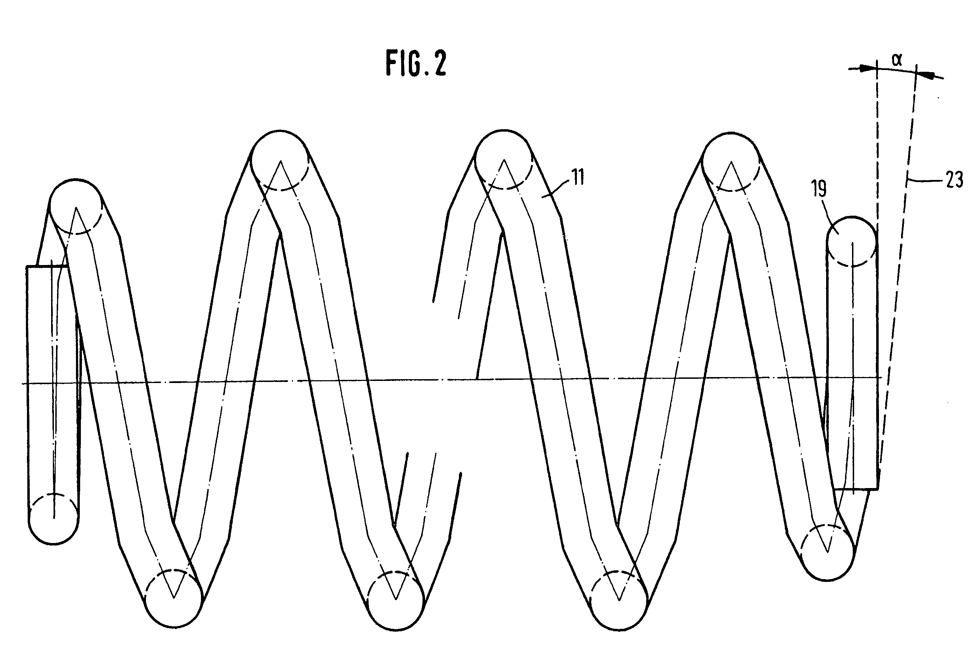

Gemäß der Erfindung wird bei Druckfedern der in Rede stehenden Art der zur Verfügung stehende Bauraum innerhalb der Windungen der Druckfeder genutzt, wie nachfolgend erläutert ist. Hierbei taucht eine der Endwindungen 19 der Druckfeder oder es tauchen beide Endwindungen jeweils in die erste bzw. weitere federnde Windungen der entsprechenden Seite der Druckfeder 11 ein, derart, daß im voll eingefedertem Zustand (Hub = 0) die Federlänge verkürzt ist. Die Grundform der Druckfeder entspricht dabei der bekannten Form einer zylindrischen Feder mit zwei eingezogenen Enden bzw. einem eingezogenem Ende oder der Tonnenform. Ein wesentliches Merkmal ist hierbei die Gestaltung der Federauflagen der Kolben- bzw. Gehäuseseite. Diese sind mit einer negativen, also der Windungssteigung der Druckfeder 11 entgegengesetzten Steigung ausgeführt. Damit wird erreicht, daß die Druckfeder beim Einbau zunächst mit den Spitzen der beiden Endwindungen 19 auf dem Kolben 13 bzw. Boden 21 des Gehäuses aufsteht. Die Spitzen der Endwindungen 19 befinden sich demnach am höchsten Punkt einer abfallenden wendelförmigen Abwälzrampe 23 mit einem Winkel α von negativer Steigung (Figur 2). Dieser Zustand besteht bei entspannter Druckfeder. Bei der anschließenden Einfederung wälzen die Endwindungen 19 der Druckfeder auf der Abwälzrampe 23 ab und erhalten dadurch ebenfalls eine negative, also zum Steigungssinn der federnden Windungen der Druckfeder entgegengesetzte Steigungsrichtung. Dies führt zur Lage der Endwindungen innerhalb der ersten bzw. weiteren federnden Windung, wie in Figur 1 der Zeichnung dargestellt ist.

Da für die vorstehend genannte Verformung der Federenden der Druckfeder zusätzliche Arbeit aufgebracht werden muß, nimmt sie auch mehr Energie auf, so daß diese bei Hubbewegung unter Federkraft in erhöhte Federarbeit umgesetzt werden kann. Würde die gleiche Druckfeder auf plane Auflageflächen des Kolbens bzw. des Bodens des Federspeicherbremszylinders gestellt, wären die Federenden oder Endwindungen nicht an der Federungsarbeit beteiligt, eine Erhöhung der Federkraft würde sich mangels Verformung nicht einstellen.

Bei der erfindungsgemäßen Gestaltung der Federanordnung sind die Druckfeder 11 und die Abwälzrampe 23 so aufeinander abgestimmt, daß sich im eingefederten Zustand (Figur 1) ein definierter Abwälzbereich a ergibt: dieser beträgt der gleichförmigen Krafteinleitung wegen etwa 270°. Es können aber auch andere Werte eingestellt werden.

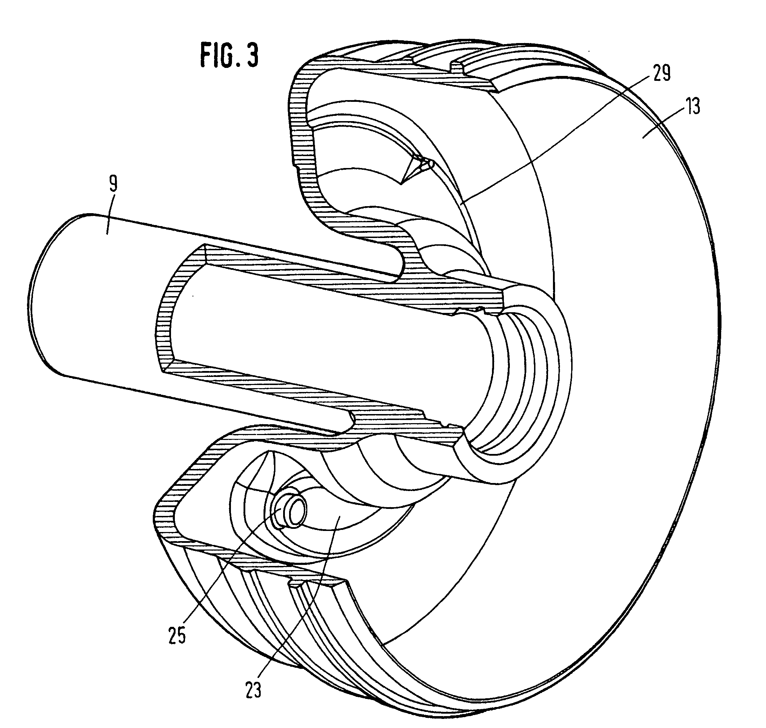

Die Rampe 19 ist bei der in Figur 1 dargestellten Ausführungsform am Kolben 13 materialeinheitlich ausgebildet, wobei sich am Ende der Rampe ein Anschlag 25 (Fig. 3) für die Federspitze der Druckfeder 11 befindet. Der Anschlag 25 wirkt hierbei als Drehsicherung für die Druckfeder und bestimmt bei der Montage die korrekte Ausgangslage.

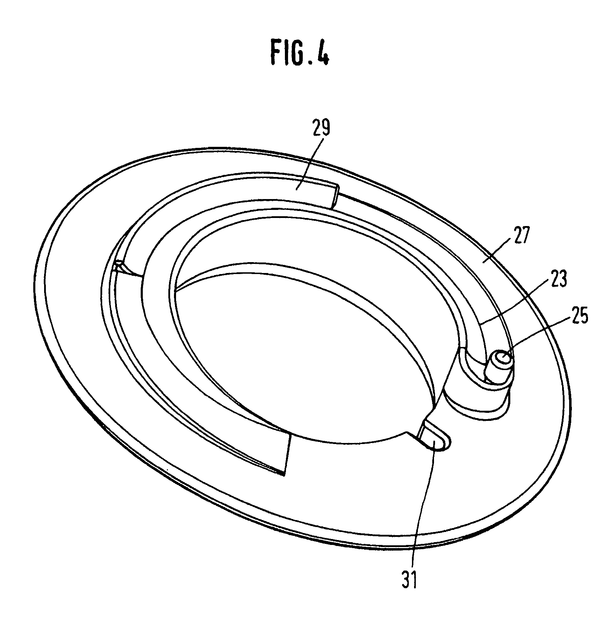

Grundsätzlich müssen die Abwälzrampen 23 nicht in die Bauteile Kolben bzw. Boden des Gehäuses integriert sein, wie dies beim Kolben 13 nach Figur 3 der Fall ist. Aus fertigungstechnischen bzw. Kostengründen kann es sich als zweckmäßig erweisen, separate Einlegeteile einzusetzen. In Figur 1 und 4 ist ein an den Boden 21 des Bremszylinders angepaßtes Einlegeteil 27 dargestellt, an welchem die die negative Steigung aufweisende Abwälzrampe mit Anschlag 25 ausgebildet ist. Zusätzlich ist am Einlegeteil eine Zentrierrippe 29 für die Druckfeder vorgesehen.

Einlegeteile 27 der vorgenannten Bauart, welche z.B. auch aus Kunststoff gefertigt werden können, vermitteln den Vorteil, daß sie schnell austauschbar sind, d.h. daß Einlegeteile mit unterschiedlichen Anstellwinkeln der Abwälzrampen zur Anwendung gebracht werden können. Die Einlegeteile sind ihrerseits vorzugsweise mit Mitteln zur Drehsicherung innerhalb des Gehäuses ausgebildet; im Ausführungsbeispiel nach Figur 4 ist eine Nut 31 vorgesehen, in welche ein (nicht dargestellter) Stift am Kolben bzw. am Boden des Gehäuses einzugreifen vermag, um eine derartige Drehsicherung gegen Drehen des Einlegeteils zu bilden.

Die Federanordnung wurde vorstehend unter Bezugnahme auf die Abwälzrampe 23 erläutert, welche als Federauflage für die Druckfeder im zusammengedrückten Zustand derselben wirkt. Hierbei ist von Bedeutung, daß sich die Endwindung innerhalb eines Winkelbereiches von z.B. 270° entlang einer negativen Steigung anlegen kann, um für die Verformung der Federenden zusätzliche Arbeit aufbringen zu müssen. Eine bündige Anlage der Endwindung(en) der Druckfeder ist jedoch nicht unbedingt erforderlich, d.h. es ist primär von Bedeutung, daß die Endwindung, beginnend von der Federspitze, ausreichend Freiheitsgrad der Verformung besitzt, um mit zunehmendem negativem Steigungssinn mehr Energie aufzunehmen. Die Endwindung der Druckfeder kann demnach bezüglich des zugewandten Bodens oder Kolbens berührungsfrei verlaufen, so daß ein Endanschlag 21 am Kolben bzw. Gehäuseboden den einzigen direkten Anlagepunkt der Endwindung(en) der Druckfeder bildet. Bei Abwälzung an der Rampe, sei es mit oder ohne Einlegeteil, ist jedoch vorzugsweise eine exakte Bestimmung des Hubes unter genauer Zentrierung der Feder möglich. Was die Formgebung der Druckfeder in ihrem entlasteten Zustand (Fig. 2) betrifft, so kann die Endwindung natürlich unter einem positiven oder negativen Winkel angestellt sein, wodurch beim Zusammendrücken das Ausmaß der Verformung und der aufzubringenden Verformungsarbeit mit bestimmt wird.

### Bezugszeichenliste

- 1: Bremszylinder
- 3: Betriebsbremszylinder
- 5: Federspeicherbremszylinder
- 7: Betätigungsstößel
- 9: Kolbenstange
- 11: Druckfeder
- 13: Kolben
- 15: Druckkammer
- 17: Federkammer
- 19: Endwindung
- 21: Boden
- 23: Abwälzrampe
- 25: Anschlag
- 27: Einlegeteil
- 29: Zentrierrippe
- 31: Nut

## Patentansprüche

1. Bremszylinder, insbesondere von Feststellbremsen bei Nutzfahrzeugen, beinhaltend eine Druckfederanordnung mit einer zwischen einem im Gehäuse des Bremszylinders (5) verschiebbaren Kolben (13) und einem Boden (21) des Bremszylindergehäuses befindlichen, bei Verschiebung des Kolbens (13) spannbaren schraubenförmigen Druckfeder (11), die mit wenigstens einer eingezogenen Endwindung (19) versehen ist, welche beim Spannen der Druckfeder (11) in die angrenzende (n) Federwindung (en) einzutauchen vermag, **dadurch gekennzeichnet, daß** die Endwindung (19) bei Anlage ihrer Federspitze am Kolben (13) bzw. am Boden (21) des Bremszylindergehäuses auf einem vorgegebenen Winkelbereich einen Freiheitsgrad ihrer Verformung entlang einer negativen, zum Steigungssinn der federnden Windungen der Druckfeder (11) entgegengesetzten Steigungsrichtung aufweist

2. Bremszylinder nach Anspruch 1, **dadurch gekennzeichnet, daß** die Verformung entlang der negativen Steigung mit Ausnahme der Abstützung der Federspitze berührungsfrei gegenüber der zugewandten Fläche des Kolbens (13) bzw. des Bodens (21) verläuft.

3. Bremszylinder nach Anspruch 1 oder 2, **dadurch gekennzeichnet, daß** die weitere Verformung unter Auflage entlang einer am Kolben (13) bzw. am Boden (21) ausgebildeten Abwälzrampe (23) besteht.

4. Bremszylinder nach Anspruch 3, **dadurch gekennzeichnet, daß** die Abwälzrampe (23) auf einem Winkelbereich von ca. 270° am Kolben (13) bzw. am Boden (21) des Bremszylinders ausgebildet ist und in einem Anschlag (25) für die Spitze der Endwindung (en) endet.

5. Bremszylinder nach einem der vorangehenden Ansprüche, **gekennzeichnet durch** folgende Merkmale:
a) an der der Druckfeder (11) zugewandten Seite des Kolbens (13) und/oder des Bodens (21) des Bremszylinders ist ein separates Einlegeteil (27) angepaßt; und
b) am Einlegeteil (27) ist eine der unter einem negativen Winkel verlaufenden Verformung der Endwindung (en) der Druckfeder (11) entsprechende Abwälzrampe (23) auf einem Winkelbereich von vorzugsweise 270° ausgebildet.

6. Bremszylinder nach Anspruch 5, **gekennzeichnet durch** einen am Ende der Abwälzrampe (23) befindlichen Anschlag (25) für die Windungsspitze der Druckfeder (11).

7. Bremszylinder nach einem der vorangehenden Ansprüche, bei Verwendung wenigstens eines Einlegeteils für den Kolben (13) oder den Boden (21) des Bremszylinders, **gekennzeichnet durch** eine die Relativlage des Einlegeteils (27) gegenüber dem Kolben (13) oder dem Boden (21) des Bremszylindergehäuses sichernde Drehsicherung.

8. Bremszylinder nach einem der vorangehenden Ansprüche, **dadurch gekennzeichnet, daß** am Kolben (13) bzw. Boden (21) des Bremszylinders eine Zentrierrippe (29) für die Endwindung der Druckfeder (11) ausgebildet ist.

9. Bremszylinder nach einem der Ansprüche 5 bis 7, **dadurch gekennzeichnet, daß** am Einlegeteil (27) eine Zentrierrippe (29) für die Endwindung der Druckfeder (11) ausgebildet ist.

10. Bremszylinder nach einem der Ansprüche 5 bis 7 oder 9, **dadurch gekennzeichnet, daß** das Einlegeteil (27) aus Kunststoff besteht.

11. Bremszylinder nach einem der vorhergehenden Ansprüche, **dadurch gekennzeichnet, daß** dieser durch einen Federspeicherbremszylinder (5) gebildet ist.

12. Bremszylinder nach Anspruch 11, **dadurch gekennzeichnet, daß** der Federspeicherbremszylinder (5) mit einem Betriebsbremszylinder (3) in Form eines kombinierten Betriebsbrems- und Federspeicherbremszylinders gekoppelt ist.

## Claims

1. A brake cylinder, especially of parking brakes installed in commercial vehicles, containing a pressure spring arrangement with a helical pressure spring (11) located between a piston (13) which can be moved in the housing of the brake cylinder (5) and a base (21) of the brake cylinder housing which can be loaded by moving the piston (13) and which is provided with at least one retracted final winding (19) which is able to immerge into the adjacent spring winding(s) when the pressure spring (11) is loaded,
**characterised in that**
when the spring tips of the final winding (19) are supported on the piston (13) or the base (21) of the brake cylinder housing, said final winding (19) has a degree of freedom of deformation covering a predetermined angle range along a negative direction of inclination contrary to the direction of inclination of the spring windings of the pressure spring (11).

2. A brake cylinder in accordance with claim 1,
**characterised in that**
the deformation runs along the negative inclination over the facing surface of the piston (13) or the base (21) contact-free with the exception of the support for the spring tips.

3. A brake cylinder in accordance with claim 1 or 2,
**characterised in that**
the further deformation exists with contact along a roll-off ramp (23) configured on the piston (13) or the base (21).

4. A brake cylinder in accordance with claim 3,
**characterised in that**
the roll-off ramp (23) is configured on the piston (13) or the base (21) of the brake cylinder covering an angle range of approx. 270° and ends in a stop (25) for the tip of the final winding (19).

5. A brake cylinder in accordance with one of the preceding claims,
**characterised by** the following features:
a) a separate insert (27) is adapted to the side of the piston (13) and/or base (21) of the brake cylinder facing the pressure spring (11); and
b) a roll-off ramp (23) corresponding to the deformation of the final winding(s) of the pressure spring (11) which runs at a negative angle is configured on the insert (27) covering an angle range of preferably 270°.

6. A brake cylinder in accordance with claim 5,
**characterised by**
a stop (25) for the winding tip of the pressure spring (11) located at the end of the roll-off ramp (23).

7. A brake cylinder in accordance with one of the preceding claims, using at least one insert for the piston (13) or the base (21) of the brake cylinder,
**characterised by**
a anti-rotation device which secures the relative position of the insert (27) in relation to the piston (13) or the base (21) of the brake cylinder housing.

8. A brake cylinder in accordance with one of the preceding claims,
**characterised in that**
configured on the piston (13) or the base (21) of the brake cylinder is a centring rib (29) for the final winding of the pressure spring (11).

9. A brake cylinder in accordance with one of claims 5 to 7,
**characterised in that**
configured on the insert (27) is a centring rib (29) for the final winding of the pressure spring (11).

10. A brake cylinder in accordance with one of claims 5 to 7 or 9,
**characterised in that**
the insert is made of plastic.

11. A brake cylinder in accordance with one of the preceding claims,
**characterised in that**
it takes the form of a spring brake cylinder (5).

12. A brake cylinder in accordance with claim 11,
**characterised in that**
the spring brake cylinder (5) is coupled with a service brake cylinder (3) in the form of a combined service and spring brake cylinder.

## Revendications

1. Cylindre de frein, en particulier de freins de stationnement pour des véhicules utilitaires, qui comprend un agencement de ressort de pression comportant un ressort de pression (11) hélicoïdal, situé entre un piston (13) mobile dans le boîtier du cylindre de frein (5) et un fond (21) du boîtier de cylindre de frein, pouvant être bandé lorsque le piston (13) est poussé et muni d'au moins une spire terminale (19) rentrée qui peut plonger dans la ou les spires de ressort voisine(s) lorsque le ressort de pression (11) est bandé, **caractérisé en ce que** la spire terminale (19), lorsque sa pointe de ressort s'applique au piston (13) ou au fond (21) du boîtier de cylindre de frein sur une zone angulaire prédéterminée, présente un degré de liberté de sa déformation le long d'un sens de pente négatif, opposé au sens de la pente des spires élastiques du ressort de pression (11).

2. Cylindre de frein selon la revendication 1, **caractérisé en ce que** la déformation le long de la pente négative, à l'exception de l'appui de la pointe de ressort, s'étend sans contact par rapport à la surface du piston (13) ou du fond (21), qui est tournée dans cette direction.

3. Cylindre de frein selon la revendication 1 ou 2, **caractérisé en ce que** le reste de la déformation est effectué en s'appuyant le long d'une rampe de roulement (23) formée sur le piston (13) ou sur le fond (21).

4. Cylindre de frein selon la revendication 3, **caractérisé en ce que** la rampe de roulement (23) est formée dans une zone angulaire d'environ 270° sur le piston (13) ou sur le fond (21) du cylindre de frein et se termine en une butée (25) destinée à la pointe de la ou des spire(s) terminale(s).

5. Cylindre de frein selon l'une des revendications précédentes, **caractérisé par** les spécifications suivantes :
a) une pièce d'insertion (27) distincte est adaptée du côté - tourné vers le ressort de pression (11) - du piston (13) et/ou du fond (21) du cylindre de frein et
b) sur la pièce d'insertion (27) est formé dans une zone angulaire, de préférence de 270°, une rampe de roulement (23) qui correspond à la déformation - selon un angle négatif - de la spire terminale (des spires terminales) du ressort de pression (11).

6. Cylindre de frein selon la revendication 5, **caractérisé par** une butée (25), située à l'extrémité de la rampe de roulement (23), pour la pointe de spire du ressort de pression (11).

7. Cylindre de frein selon l'une des revendications précédentes pour lequel on utilise au moins une pièce d'insertion destinée au piston (13) ou au fond (21) du cylindre de frein, **caractérisé par** une protection contre la torsion qui maintient la position relative de la pièce d'insertion (27) par rapport au piston (13) ou au fond (21) du boîtier de cylindre de frein.

8. Cylindre de frein selon l'une des revendications précédentes, **caractérisé en ce qu'**une cannelure de centrage (29) de la spire terminale du ressort de pression (11) est formée sur le piston (13) ou le fond (21) du cylindre de frein.

9. Cylindre de frein selon l'une des revendications 5 à 7, **caractérisé en ce qu'**une cannelure de centrage (29) de la spire terminale du ressort de pression (11) est formée sur la pièce d'insertion (27).

10. Cylindre de frein selon l'une des revendications 5 à 7 ou 9, **caractérisé en ce que** la pièce d'insertion (27) est en matière plastique.

11. Cylindre de frein selon l'une des revendications précédentes, **caractérisé en ce que** celui-ci est formé par un cylindre de frein à accumulateur (5).

12. Cylindre de frein selon la revendication 11, **caractérisé en ce que** le cylindre de frein à accumulateur (5) est couplé à un cylindre de frein de service (3) sous forme d'un cylindre combiné de frein de service et de frein à accumulateur.
